# EUROPÄISCHE PATENTSCHRIFT

(11) **EP 1 302 369 B1**
(45) Veröffentlichungstag und Bekanntmachung des Hinweises auf die Patenterteilung: **20.07.2005**
(21) Anmeldenummer: 02019402.3
(22) Anmeldetag: 30.08.2002
(51) Int. Cl.: B60R 13/02, B60H 1/00, B60R 5/00

(54) **Deckenverkleidungs- und Luftleitsystem**
Roof liner and air duct system
Système de revêtement de toit et conduit d'air

(30) Priorität: 16.10.2001 DE 10152659
(43) Veröffentlichungstag der Anmeldung: 16.04.2003
(73) Patentinhaber: Happich Interiors GmbH, 42279 Wuppertal (DE)
(72) Erfinder: Jäckel, Helmut, 42553 Velbert (DE); Gebel, Thomas, 42111 Wuppertal (DE); Marcus, Armin, 42399 Wuppertal (DE); Diehl, Christian, 42551 Velberg (DE); Schulz, Fritz Günther, 42897 Remscheid (DE)

(56) Entgegenhaltungen:
- DE-U- 7 333 031
- FR-A- 2 542 828
- GB-A- 2 003 598

## Beschreibung

Die Erfindung bezieht sich auf ein Deckenverkleidungs- und Luftleitsystem für Großraumfahrzeuge.

Derartige Systeme sind in den verschiedensten Ausführungsformen bekannt, jedoch mit dem entscheidenden Nachteil eines individuellen Aufbaus je Fahrzeugtyp. Die einzelnen Bauteile müssen daher herkömmlicherweise jeweils neu konstruiert, hergestellt und zusammengebaut werden, was sowohl für den Produzenten als auch für den Weiterverarbeiter hinsichtlich Zeitaufwand und Kosten nahezu untragbar geworden ist. Dabei ist zu berücksichtigen, dass nicht nur Großraumfahrzeuge in Form von Reisebussen mit zunehmenden Stückzahlen gebaut werden, sondern insbesondere auch Kleinbusse, wie Mini- und Midibusse.

Ein Deckenverkleidungs- und Luftleitsystem der gattungsgemäßen Art ist z. B. aus der GB-A-2003598 bekannt. Es bezieht sich diese Druckschrift auf einen Linien-Omnibus mit in seinen Fahrzeugseitenwänden enthaltenen Frischluftöffnungen, die mit Hilfe von verschwenkbaren, in einer Offen- bzw. Schließstellung arretierbaren Klappen verschlossen werden können. Es ist dabei gemäß der in dieser Druckschrift beschriebenen Anordnung vorgesehen, dass die Frischluftöffnungen oberhalb der Fenster und unterhalb der Dachkonstruktion angeordnet sind und die Klappen an ihrem unteren Rand verschwenkbar im Bereich der Unterseite der Frischluftöffnungen gelagert sind und in Schließstellung unter Überbrückung des Verbindungsecks zwischen dem Dach und der jeweiligen Fahrzeugseitenwand an einem an der Dachabschlusswand angeordneten Anschlag anliegt, während sie in Offenstellung soweit herunter geschwenkt gehalten sind, dass sich zwischen der Dachabschlusswand und den Klappen eine V-förmige, sich stetig zum Fahrzeuginneren hin verjüngende Durchtrittsöffnung ergibt. Es soll durch eine derartige Ausbildung eine ausreichende, im Wesentlichen gleichmäßige Be- und Entlüftung des gesamten Fahrzeuginnenraums möglich sein.

Die konstruktive Ausgestaltung der in dieser Druckschrift beschriebenen Anordnung ist dabei derart, dass sowohl die Dachkonstruktion als auch die Seitenwandkonstruktion mit Hilfe von Rohrprofilen hergestellt ist. So befindet sich z. B. oberhalb des Seitenfensters ein Längsprofil, das die untere Begrenzung für Frischluftöffnungen bildet. Die obere Begrenzung wird durch ein Eckenverbindungsprofil geschaffen, das auch die Verbindung zur Dachkonstruktion herstellt. An der Dachinnenseite ist eine Dachabschlusswand eingezogen. Hinter den in der Fahrzeugseitenwand angeordneten Frischluftöffnungen schließt sich ein Luftkanal an, der zur Fahrzeugaußenwand hin mit einem durchlässigen Gitter verblendet ist. Unter Überbrückung des durch die Verbindung der Dachkonstruktion mit der Seitenwand gegebenen Winkels ist zwischen der Dachkonstruktion und der Seitenwand eine Klappenkonstruktion eingefügt. Diese weist einen Klappenrahmen auf, der aus einem einstückigen Profil besteht. Das Profil besitzt an seiner Oberseite einen Befestigungssteg, mit Hilfe dessen es an die Dachkonstruktion angenietet ist. An seiner Unterseite ist das Profil mit Hilfe eine Stegs an dem zuvor erwähnten Längsprofil der Fahrzeugseitenwand befestigt. Es ist dabei ein Schenkel in das Fahrzeuginnere gerichtet und trägt eine Schiene für einen eventuell daran anzubringenden Vorhang, sowie an seinem freien Ende eine Verkleidungsschiene. Das obere freie Ende des Schenkels ist V-förmig zurück gebogen, um so als Lager für eine Stellfeder zu dienen, die zum Arretieren einer Klappe in zwei Endstellungen dient. Es ist dabei an der dem Fahrzeuginnenraum zugewandten Oberfläche diese Klappe mit einer formschlüssig eingesetzten Isolierschicht verblendet.

Der vorliegenden Erfindung liegt die Aufgabe zugrunde ein für die genannten Großraumfahrzeuge gemeinsam geeignetes Konzept aufzuzeigen, das ein Deckenverkleidungs- und Luftleitsystem mit einem additiv, modularen Aufbau vorsieht, der sowohl unterschiedliche Ausbaustufen für den Produzenten als auch für den Weiterverarbeiter ermöglicht. Insbesondere wird mit der Erfindung der Einsatz von Standardteilen angestrebt, und zwar von der einfachsten bis zur exklusivsten Ausführungsform, die je nach Kundenwunsch zu realisieren ist.

Zur Lösung dieser Aufgabe ist erfindungsgemäß ein Deckenverkleidungs- und Luftleitsystem der im Anspruch 1 gekennzeichneten Art vorgesehen, während zweckmäßige Weiterbildungen und vorteilhafte Ausgestaltungen der Erfindung in den Unteransprüchen angegeben sind.

Im folgenden soll die Erfindung anhand der anliegenden Zeichnungen näher erläutert werden, und es zeigen:
- Fig. 1: einen Übergangsbereich vom Fahrzeugdach zu einer Fahrzeugseitenwand eines Großraumfahrzeugs mit einer Standardsystemausführung,
- Fig. 2: eine vergrößerte Darstellung des in Fig. 1 strichpunktiert eingekreisten Systembereichs A,
- Fig. 3: eine vergrößerte Darstellung des in Fig. 1 strichpunktiert eingekreisten Systembereichs B,
- Fig. 4: eine vergrößerte Darstellung des in Fig. 1 strichpunktiert eingekreisten Systembereichs C,
- Fig. 5: die Standard-Systemausführung nach Fig. 1 mit einer Systemerweiterung,
- Fig. 6: eine vergrößerte Darstellung des in Fig. 5 strichpunktiert eingekreisten Systembereichs D,
- Fig. 7: die Standard-Systemausführung nach Fig. 1 mit einer Systemergänzung in Form einer Gepäckablage mit Hauptluftkanal,
- Fig. 8: eine vergrößerte Darstellung des in Fig. 7 strichpunktiert eingekreisten Systembereichs E,
- Fig. 9: die Systemausführung nach Fig. 5 mit einer Systemergänzung in Form einer Gepäckablage mit Hauptluftkanal,
- Fig. 10: eine perspektivische Gesamtansicht der Systemausführung nach Fig. 1,
- Fig. 11: eine perspektivische Gesamtansicht der Systemausführung nach Fig. 7,
- Fig. 12: einen Vertikalschnitt durch ein Großraumfahrzeug mit einer Systemausführung nach Fig. 5,
- Fig. 13: einen Vertikalschnitt durch ein Großraumfahrzeug mit einer Systemausführung nach Fig. 9,
- Fig. 14: einen Vertikalschnitt durch ein Großraumfahrzeug mit einer Systemausführung nach Fig. 7,
- Fig. 15: eine Einzelheit des Systems und
- Fig. 16: einen Vertikalschnitt durch ein Großraumfahrzeug mit einer Systemausführung nach Fig. 7.

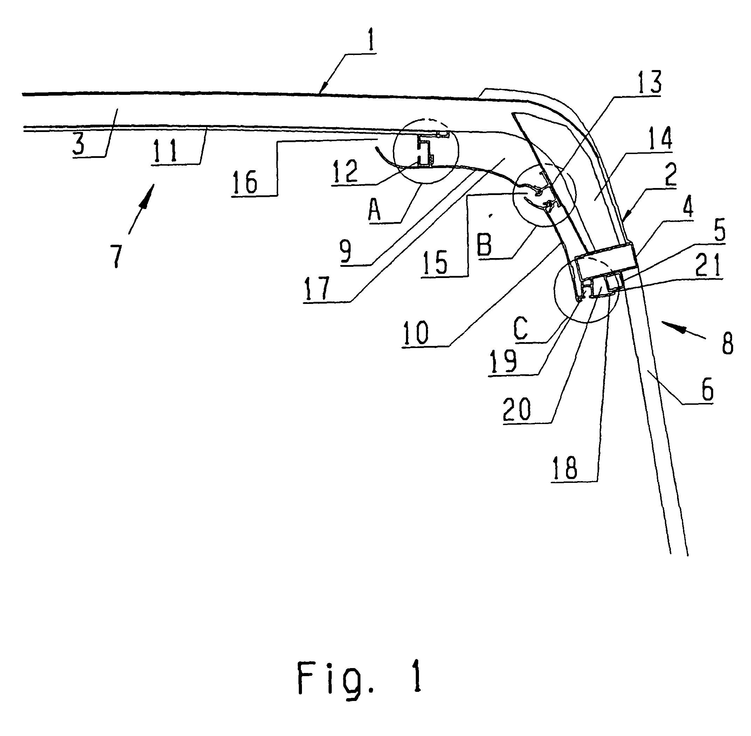

Fig. 1 lässt den oberen Bereich eines Fahrzeugs erkennen und zeigt das Dachblech 1 und das sich daran anschließende Seitenwandblech 2. Zum Fahrzeugaufbau gehören Querholme bzw. Spriegel 3, auf die sich das Dachblech 1 abstützt und Längsholme 4 und 5 als obere Begrenzung einer Fensteröffnung und zur Abstützung einer Fensterscheibe, die hier als große Panoramascheibe 6 ausgebildet ist.

Im Übergangsbereich von der Fahrzeugdecke 7 zu den Fahrzeugseitenwänden 8, von denen Fig. 1 lediglich eine zeigt, sind jeweils zwei Verkleidungsprofile, nämlich ein oberes Verkleidungsprofil 9 und ein unteres Verkleidungsprofil 10 angeordnet, die der Fahrzeugdecke 7 im Zusammenwirken mit einer Deckenverkleidung 11 ein besonders formschönes Aussehen verleihen. Die Verkleidungsprofile 9 und 10 werden jeweils von zwei Trägerprofilen 12 und 13 gehalten, von denen das erste 12 an den Spriegeln 3 und das zweite 13 an einem zum Karosserieaufbau gehörenden Adapterelement 14 festgelegt ist.

Die Anordnung der Verkleidungsprofile 9 und 10 ist derart getroffen, dass sich zwei Längskantenbereiche derselben unter Bildung einer ersten Spaltöffnung 15 überlappen und zwischen der oberen Randkante des Verkleidungsprofils 9 und dem Fahrzeugdach bzw. der Deckenverkleidung 11 eine zweite Spaltöffnung 16 ausgebildet ist. Ferner ist die Anordnung der Verkleidungsprofile 9 und 10 so getroffen, dass sie von der angrenzenden Fahrzeugaufbaustruktur beabstandet sind, so dass sich hier ein Luftkanal 17 ergibt. Als Luftaustritt für eine Fahrzeugpermanentbelüftung dienen die Spaltöffnungen 15 und 16, die damit eine Luftflutfunktion erfüllen.

Das untere Verkleidungsprofil 10 weist einen zur benachbarten Fahrzeugseitenwand 8 hin ausgerichteten Kragen 18 mit einer darin ausgebildeten hinterschnittenen Aufnahmenut 19, beispielsweise für die Aufnahme einer Sonnenschutzeinrichtung wie ein nicht gezeigtes Rollo auf. Zwischen den Längsholmen 4 und 5 und dem Kragen 18 befindet sich ein Freiraum, der als Luftkanal 20 mit einem Luftaustrittsspalt 21 dient. Damit lassen sich die Seitenscheiben (Panoramascheiben 6) mit Frischluft versorgen. Die Luftzufuhr in den Luftkanal 17 und/oder 20 erfolgt über herkömmlich Mittel, deren nähere Erläuterung sich erübrigt.

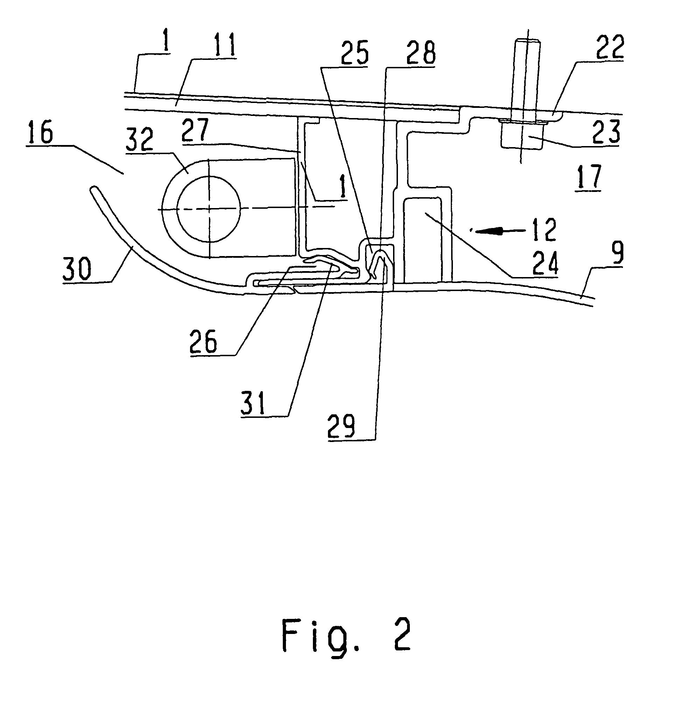

Fig. 2 zeigt im vergrößerten Maßstab den Systembereich A nach Fig. 1, die Anordnung des Trägerprofils 12 an den Spriegeln 3 und die Festlegung des oberen Verkleidungsprofils 9 am Trägerprofil 12. Das Trägerprofil 12, das vorzugsweise aus dem Abschnitt eines Aluminiumstrangpressprofils besteht, stützt sich mit einem abkragenden Schenkel 22 an den hier nicht näher dargestellten Spriegeln 3 ab und ist an diesen z. B. mittels Gewindebolzen 23 befestigt. In einem dem Schenkel 22 abgewandten verdickten Kopf sind Gewindebohrungen 24, deren Zweck noch beschrieben wird und eine eingangsseitig verengte Aufnahmenut 25 ausgebildet. An die Aufnahmenut 25 schließt sich eine, zu dieser im rechten Winkel stehende zweite Aufnahmenut 26 an, von der der obere Begrenzungsschenkel in einem nach oben gerichteten Stützsteg 27 übergeht, welcher zur Abstützung der Deckenverkleidung 11 dient. Die Aufnahmenut 25 dient zur Festlegung des Verkleidungsprofils 9, das, ebenso wie das Verkleidungsprofil 10 aus Kunststoff besteht, wobei offengelassen bleiben soll, ob es sich hierbei um ein Extrusionsteil oder Spritzgussteil handelt. Auf jeden Fall weist das Verkleidungsprofil 9 am oberen Endbereich eine daran rückseitig angeformte federnde Klipsleiste 28 mit einer sich an der eingangsseitigen Verengung der Aufnahmenut 25 abstützenden Rastnase 29 auf.

Das Verkleidungsprofil 9 weist eine Besonderheit insofern auf, als es - wie dargestellt - aus zwei Teilen bestehen und ein separat gefertigtes Endstück 30 aus Kunststoff aufweisen kann, und zwar mit einem rückseitig angeformten Klipselement 31, das in die Aufnahmenut 26 einführbar und hier verrastbar ist. Zwischen dem Trägerprofil 12 und dem Klipselement 31 des Endstücks 30 ist eine relativ große Abstützfläche vorgesehen zwecks Gewährleistung einer zuverlässigen und insbesondere auch wackelfreien Verbindung.

Der Sinn der zweiteiligen Ausbildung des Verkleidungsprofils 9 besteht in der dadurch geschaffenen Möglichkeit eine am Stützsteg 29 angeordnete Beleuchtungseinrichtung 32 problemlos zugänglich zu machen. Die Beleuchtungseinrichtung 32 kann das Fahrzeug mit Raumlicht versorgen, auch über Lichtbänder, sofern die Endstücke 30 aus transparenten Abblendprofilen bestehen.

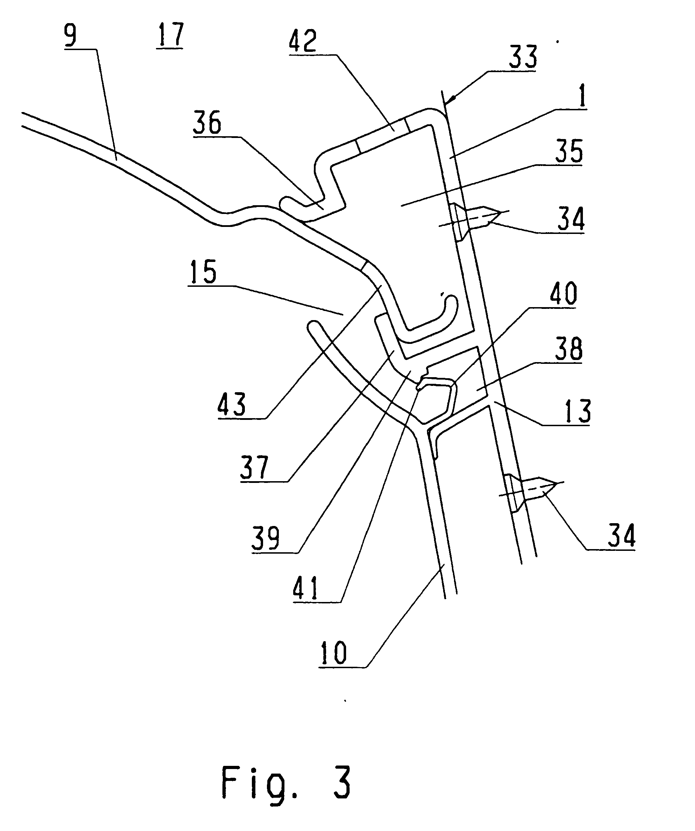

Fig. 3 zeigt im vergrößerten Maßstab den Systembereich B nach Fig. 1, lässt die Gestaltung des Trägerprofils 13, die des oberen Randbereichs des Verkleidungsprofils 9 und die des oberen Randbereichs des unteren Verkleidungsprofils 10 erkennen. Die durch das Adapterelement 14 festgelegte Karosserieadaption ist durch die Linie 33 verdeutlicht.

Das Trägerprofil 13, das über Gewindebolzen 34 am Adapterelement 14 festlegbar ist, weist eine obere Aufnahmeöffnung 35 für die Aufnahme und Abstützung des unteren Randbereichs des Verkleidungsprofils 9 auf. Die Aufnahmeöffnung 35 ist einsteckseitig durch Stege 36, 37 verengt, so dass sich für das obere Verkleidungsprofil 9 bei der Montage für den unteren Randbereich eine Einsteck- / Einrenkverbindung in bezug auf die Aufnahmeöffnung 35 und für den oberen Randbereich eine Klipsverbindung zwischen der Aufnahmenut 25 und der Klipsleiste 28 nebst Rastnasen 29 ergibt.

Unterhalb der Aufnahmeöffnung 35 ist eine Aufnahmenut 38 mit einer Hinterrastnase 39 ausgebildet, die zur Klipsaufnahme einer am oberen Randbereich des Verkleidungsprofils 10 hinterseitig angeformten federnden Klipsleiste 40 dient. Die Klipsleiste 40 weist eine die Hinterrastnase 39 hintergreifende Rastnase 41 auf.

Öffnungen 42 im Trägerprofil 13 sowie Öffnungen 43 im Verkleidungsprofil 9, die jeweils als Schlitze, Lochreihen oder dgl. ausgebildet sein können, sorgen dafür, dass die Luft aus dem Luftkanal 17 durch die Spaltöffnung 15 in den Fahrgastraum geführt werden, wie auch durch Pfeile angedeutet.

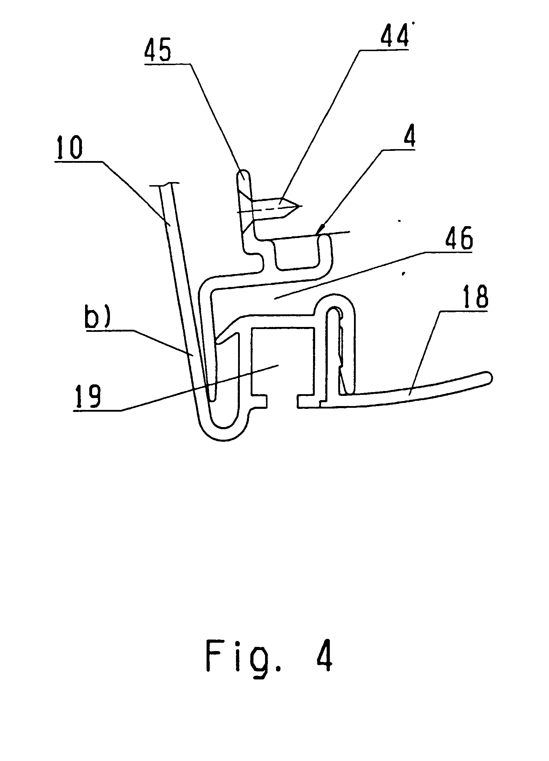

Fig. 4 zeigt im vergrößerten Maßstab den Systembereich (nach Fig. 1) und lässt ein drittes, am Längsholm 4 mittels Gewindebolzen 44 befestigtes Trägerprofil 45 sowie den unteren Randkantenbereich des Verkleidungsprofils 10 mit dem Kragen 18 und dem Aufnahmekanal 19 erkennen. Bei der Montage wird der untere Randkantenbereich des Verkleidungsprofils 10 in die Trägerprofilaufnahme 46 eingeschoben und danach der obere Randkantenbereich durch Eindrücken der Klipsleiste 40 in die Aufnahmenut 38 verrastet.

Fig. 4 zeigt auch, dass der Kragen 18 nicht notwendigerweise mit dem Verkleidungsprofil 10 einstückig ist, sondern auch als separates Bauteil ausgebildet sein kann, das mit dem Verkleidungsprofil 10 über eine Steck- / Rastverbindung vereinigt werden kann. Der Kragen 18 wird nämlich, anders als das Verkleidungsprofil 10 nicht benötigt, wenn statt Panoramascheiben 6 kleinere Normalscheiben vorgesehen sind.

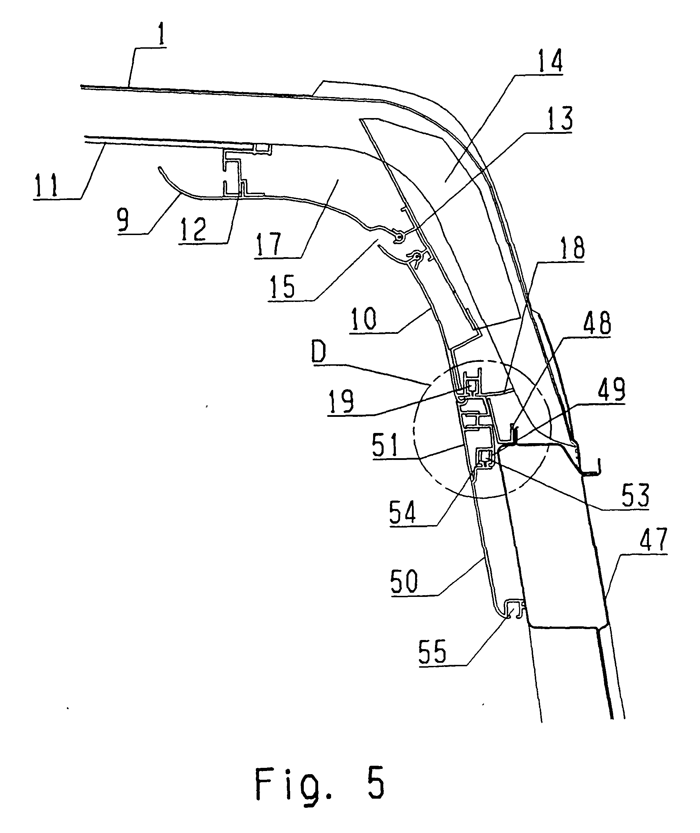

Beim Ausführungsbeispiel nach Fig. 5 schließen sich an den Längsholm 47 nach unten solche nicht näher dargestellte kleinere Normalscheiben an. Diese Ausführungsform eines Großraumfahrzeugs verlangt, allein schon aus optischen Gründen eine Ergänzung der in Fig. 1 übersichtlich dargestellten Deckenverkleidung.

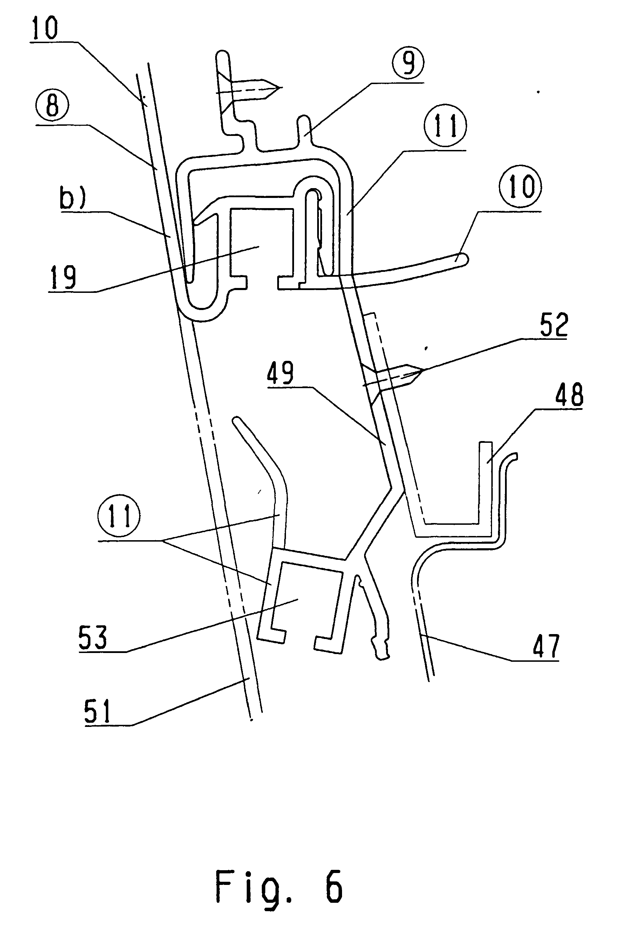

Das Deckenverkleidungs- und Luftleitsystem nach Fig. 5 ist im Hinblick darauf, dass es ein wesentliches Anliegen der vorliegenden Erfindung ist, standardisierte Teile einzusetzen, mit der vorbeschriebenen Ausführungsform identisch, darüber hinaus aber ergänzt durch ein weiteres Trägerprofil 48, ein tragendes Ergänzungsprofil 49, ein drittes Verkleidungsprofil 50 sowie ein Abdeckprofil 51. Das Trägerprofil 48 ist, vgl. auch den in Fig. 6 im vergrößerten Maßstab gezeigten Systembereich D nach Fig. 5 an der Fahrzeugkarosserie festgelegt und besteht bevorzugt aus dem Abschnitt eines Aluminiumstrangpressprofils. Am Trägerprofil 48 sitzt mittels Schrauben 52 daran festgelegt das Ergänzungsprofil 49, welches ebenfalls bevorzugter Weise aus dem Abschnitt eines Aluminiumstrangpressprofils gebildet ist, um eine tragende Funktion übernehmen zu können. Das Ergänzungsprofil 49, das oberendig in die Aufnahmenut 19 des Verkleidungsprofils 10 eingreift, weist unterendig eine ebenso gestaltete Aufnahmenut 53 auf, und zwar wahlweise zur Aufnahme eines nicht gezeigten Rollos oder zur Aufnahme einer am oberen Randbereich des Verkleidungsprofils 50 angeformten Klipsleiste 54. Eine Rolloaufnahme in Form einer hinterschnittenen Aufnahmenut 55 befindet sich hier am unteren Randkantenbereich des Verkleidungsprofils 50. Zwischen den Verkleidungsprofilen 10 und 50 ist das aus Kunststoff gebildete Abdeckprofil 51 angeordnet und dabei am Ergänzungsprofil 49 z. B. durch eine Klipshalterung festgelegt. Damit ist die Lücke zwischen den Verkleidungsprofilen 10 und 50 in optisch optimal ansprechender Weise verschlossen.

Die Erfindung besteht, soweit bis jetzt beschrieben aus Standardteilen, die vorgefertigt und auf Lager gehalten werden können. Dabei sind allenfalls zwecks Längenanpassung an die verschiedenen Fahrzeugtypen (Reise-, Mini- oder Midibusse) noch Beschneidungsmaßnahmen erforderlich. Die Erfindung ermöglicht aber insbesondere auch, diverse Bauteile modular zusammenzufassen, wobei ein modularer Aufbau z. B. für die Trägerprofile 12 mit der kompletten Beleuchtungseinrichtung 32 und mit den Endstücken 30 vorgesehen sein kann, einschließlich der sich zwischen zwei Trägerprofilen 12 erstreckenden Deckenverkleidung 11.

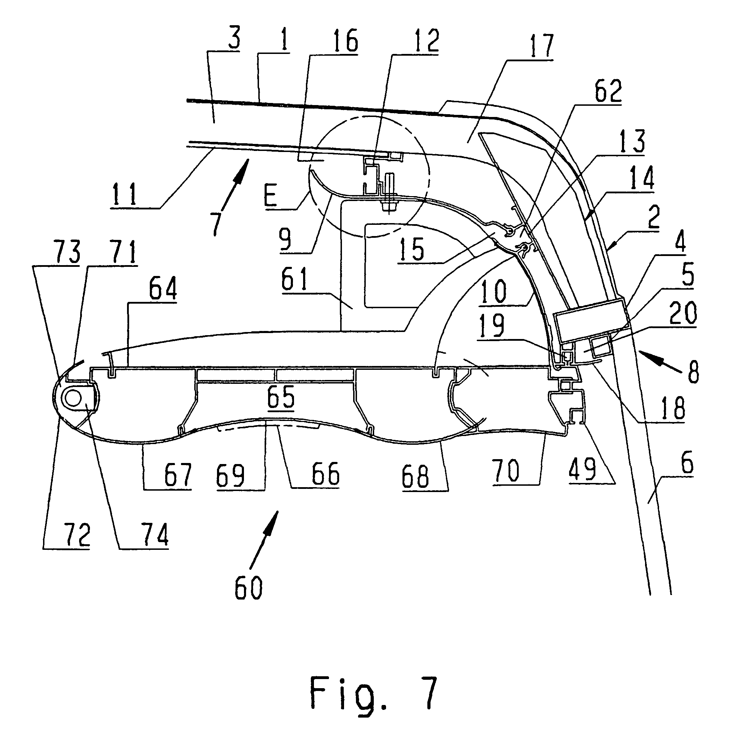

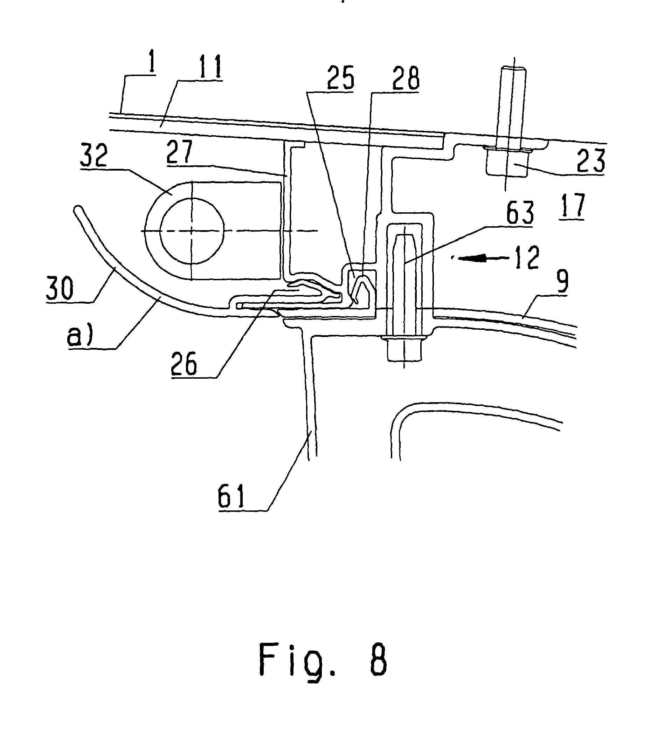

Das neue Deckenverkleidungs- und Luftleitsystem ist keineswegs auf die vorstehend beschriebenen Ausführungsformen beschränkt, denn oftmals ergibt sich für Großraumfahrzeuge die Forderung zur Anordnung einer Gepäckablage oder auch die Forderung eine Individualbelüftung, eine Individualbeleuchtung und dgl. mehr vorzusehen. Durch die vorliegende Erfindung können auch diese Forderungen erfüllt werden, und zwar unter Beibehaltung der vorbeschriebenen Aufbaustruktur. So zeigt Fig. 7 in Verbindung mit der den Systembereich E darstellenden Fig. 8 eine Lösung, mit der die nach Fig. 1 vervollkommnet wird, indem hier eine insgesamt mit dem Bezugszeichen 60 gekennzeichnete Gepäckablage vorgesehen ist. Die Gepäckablage 60 wird über Stützen 61 gehalten und die Stützen 61 sind jeweils zum einen mit einem Haken 62 in eine Aufnahme des Trägerprofils 13 eingehängt und zum anderen mit Schrauben 63, die in die Gewindebohrungen 24 des Trägerprofils 12 eingeschraubt sind, gehalten. Die Gepäckablage 60 weist eine oberflächenseitige Gepäckablagefläche 64 und insbesondere ein Hohlkammerprofil auf mit dem besonderen Vorteil, dass die Gepäckablage 60 gleichzeitig den Hauptluftkanal 65 bildet und mit Belüftungsdüsen 66 zur Individualbelüftung bestückt werden kann. Die einzelnen Kammern des Hohlkammerprofils sind über Luftdurchlassöffnungen miteinander verbunden, so dass das gesamte Hohlkammerprofil den Hauptluftkanal 65 bildet. Das Hohlkammerprofil der Gepäckablage 60 kann aus einem Leichtmetallstrangpressprofil bestehen, wobei an die optische Beschaffenheit der Oberflächen keine besonderen Anforderungen zu stellen sind, denn mittels Dekorprofilen 67, 68 und 69 kann der jeweils gewünschte ästhetische Effekt jeweils problemlos erreicht werden. Das Dekorprofil 69 ist zudem zur Aufnahme sogenannter Servicesets ausgebildet, die neben den erwähnten Belüftungsdüsen 66 mit Beleuchtungseinrichtungen, Lautsprechern, Schaltern, Bedienruftasten und dgl. ausgerüstet sind. Der Freiraum zwischen dem Hohlkammerprofil der Gepäckablage 60 und der Fahrzeugseitenwand 8 oder der Panoramascheibe 6 kann mit einem rohrartigen Füllstück 70 überbrückt werden, wobei es sich empfiehlt zur Festlegung des Füllstücks 70 ein Ergänzungsprofil 49, wie anhand von Fig. 5 beschrieben, vorzusehen.

An der Gepäckablage 60 ist längs des vorderseitigen Rands ein Handlauf 71 z. B. über eine Klipmontage befestigt. Dieser Handlauf 71 umschließt, bis auf eine Spaltöffnung 72 einen Hohlraum 73, welcher zur Aufnahme einer Beleuchtungseinrichtung 74 genutzt wird. Je nach Wunsch der Abnehmerschaft kann das Füllstück 70 auch durch ein dem Handlauf 71 entsprechendes Bauteil als optisch ansprechender Abschluss ersetzt werden, und zwar mit oder ohne eine Beleuchtungseinrichtung.

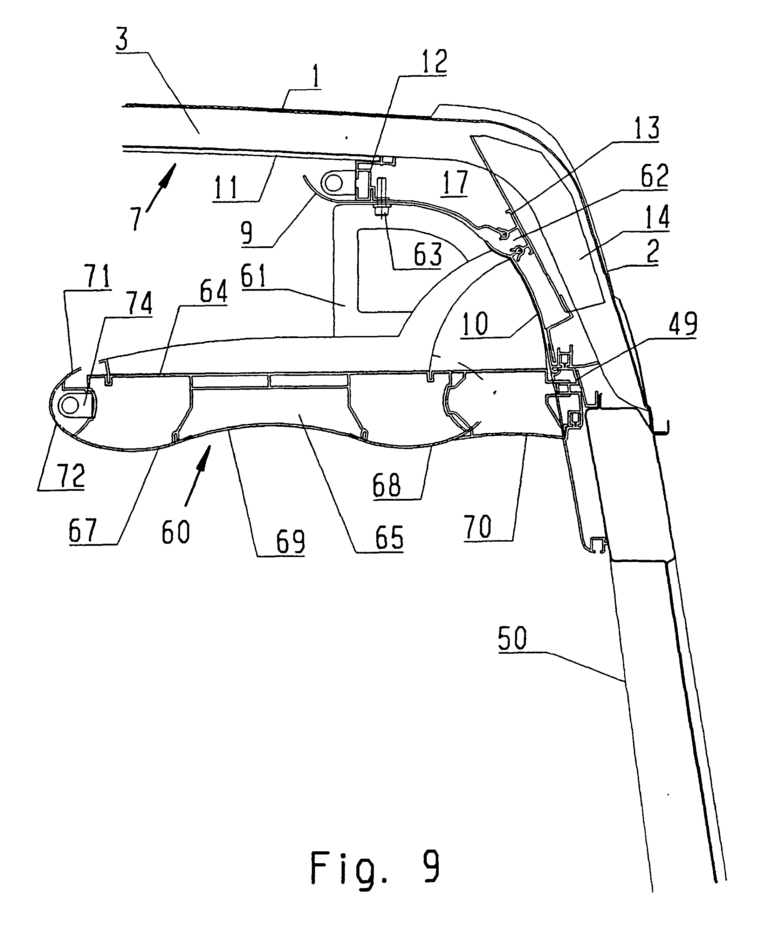

Fig. 9 zeigt eine Lösung mit der die nach Fig. 5 vervollkommnet wird durch die Anordnung einer Gepäckablage 60. Die Gepäckablage 60 entspricht in ihrem Aufbau und in ihrer Anordnung exakt der anhand von Fig. 7 beschriebenen Ausführungsform, so dass hier eine nochmalige Erläuterung nicht erforderlich ist. Es bleibt nur zu erwähnen, dass das Abdeckprofil 51 nach Fig. 5 entfällt, sofern am Ergänzungsprofil 49 ein Füllstück 70, wie in Fig. 7 gezeigt zur Anordnung kommen soll.

Das neue Deckenverkleidungs- und Luftleitsystem für Großraumfahrzeuge besticht durch die Einfachheit seiner Standardbauteile, und zwar sowohl hinsichtlich ihres Aufbaus als auch hinsichtlich ihrer Montierbarkeit. Dabei ist auch die baukastenartige Aufbaumöglichkeit besonders hervorzuheben. Die Standardelemente, kommen von der einfachsten bis zur exklusivsten Ausführungsform zum Einsatz und es bleibt der Abnehmerschaft überlassen, ob eine Beleuchtungseinrichtung oder eine Gepäckablage vorgesehen werden soll, wobei aber der Verzicht einer Gepäckablage auch gleichzeitig ein Verzicht auf eine Individualbelüftung bedeutet.

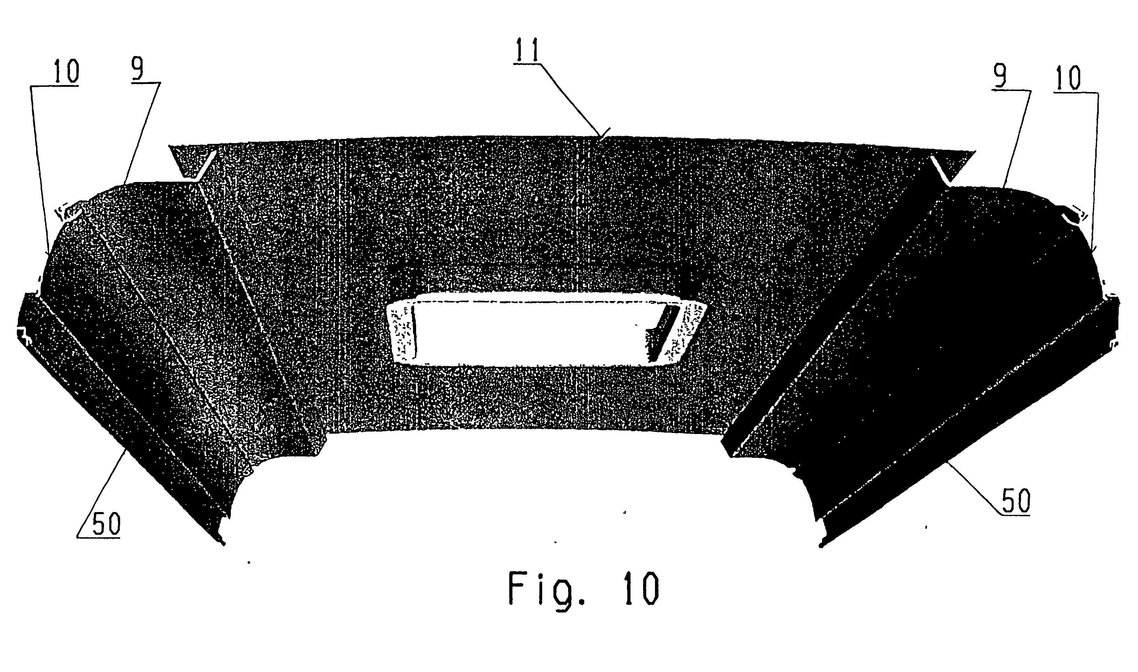

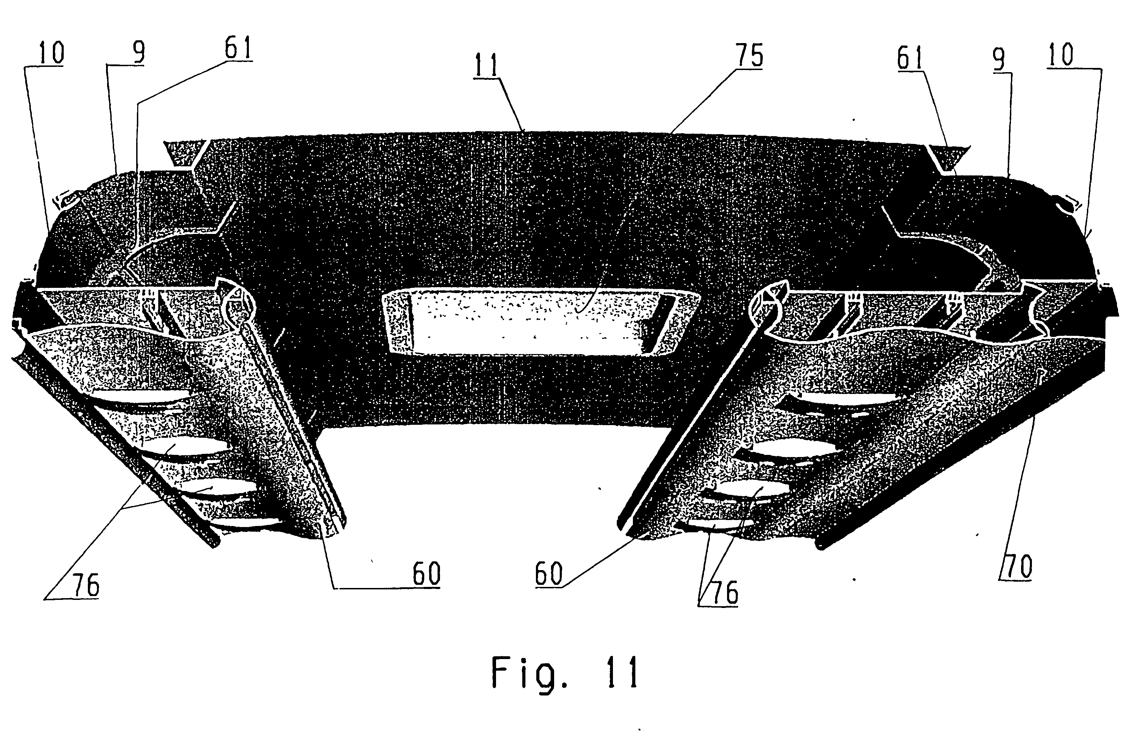

Zur besseren Verdeutlichung der Erfindung zeigt Fig. 10 eine perspektivische Ansicht der Ausführungsform nach Fig. 5 und Fig. 11 eine perspektivische Ansicht der Ausführungsform nach Fig. 7. Dabei ist ersichtlich, dass in der Deckenverkleidung 11 ein Ausschnitt 75 für eine Dachluke vorgesehen ist und dass der Boden der Gepäckablage 60 oder des Dekorprofils 69 der Gepäckablage 60 eine Reihe von Öffnungen 76 für die Anordnung von nicht gezeigten Servicesets aufweist. Aus Fig. 10 ist auch ersichtlich, dass die Gepäckablage 60 bis an die Fahrzeugseitenwand 8 heranreichen kann (linke Darstellungsseite) oder von der Fahrzeugseitenwand 8 durch die Anordnung eines Füllstücks 70 beabstandet sein kann.

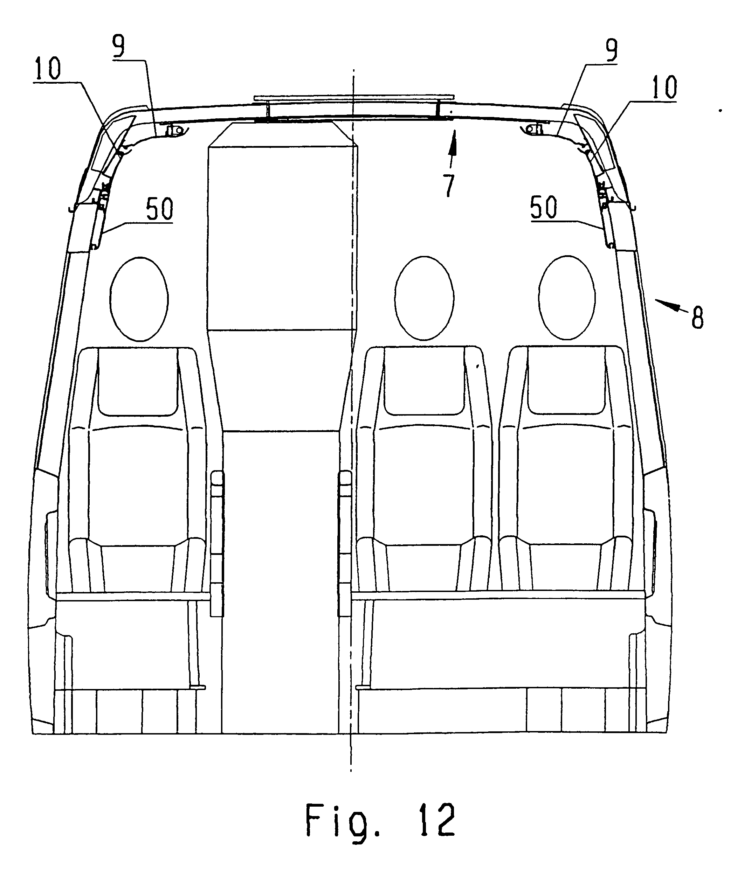

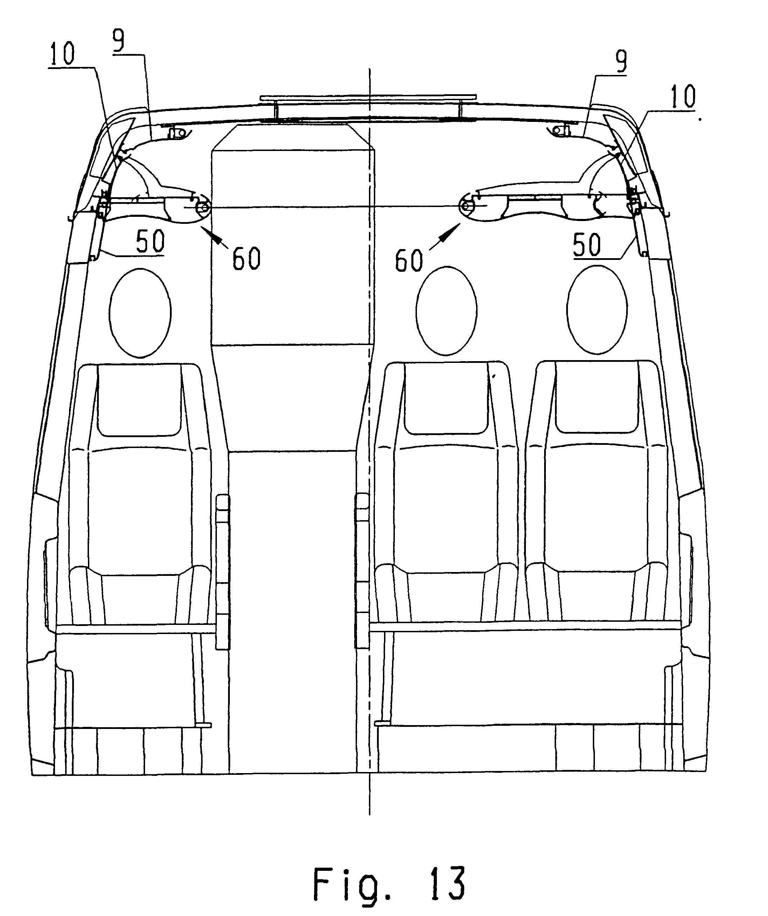

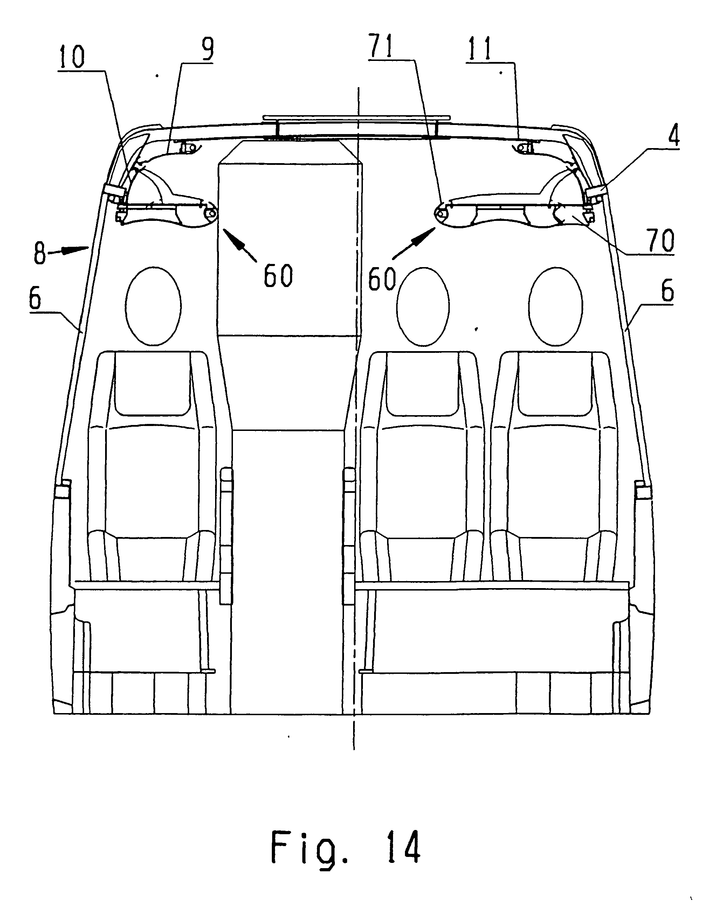

Fig. 12 zeigt einen Vertikalschnitt durch ein Großraumfahrzeug mit einem Deckenverkleidungs- und Luftleitsystem wie es weiter oben anhand von Fig. 5 beschrieben ist, wobei die Anordnung der Verkleidungsprofile 9, 10 und 50 in den Übergangsbereichen von der Fahrzeugdecke zu den Fahrzeugseitenwänden 8 gut ersichtlich ist. Fig. 13 zeigt den gleichen Vertikalschnitt wie Fig. 12, wobei jedoch das Deckenverkleidungs- und Luftleitsystem durch eine relativ schmale Gepäckablage 60, oberhalb der Einsitzerreihe, und durch eine relativ breite Gepäckablage 60, oberhalb der Doppelsitzreihe ergänzt ist. Das Ausführungsbeispiel nach Fig. 14 zeigt die gleiche Ausführungsform in einem mit Panoramascheiben 6 ausgerüsteten Großraumfahrzeug.

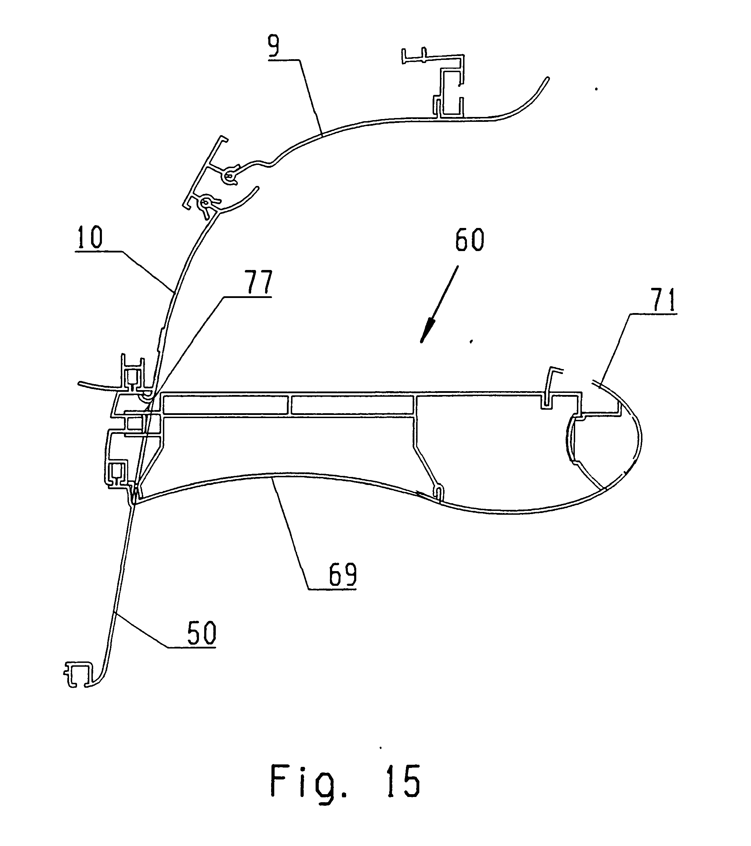

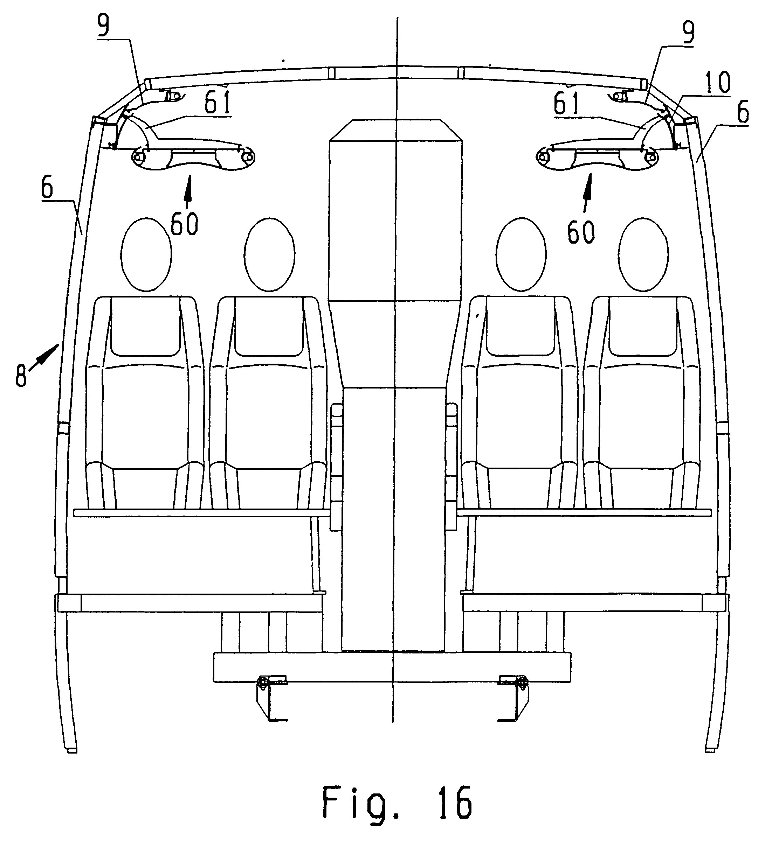

Fig. 15 zeigt ein Hohlkammerprofil für eine Gepäckablage 60 geringer Breite, dessen Endstück 77 unmittelbar am Ergänzungsprofil 49 anschließbar ist, im übrigen aber ebenso wie jede der anderen Gepäckablagen 60 auch, von Stützen 61 getragen wird. In Fig. 14 sind mit strichpunktierten Linien ein Dekorprofil 69 sowie Ausführungsformen von Handläufen 71 angedeutet. Die Gepäckablage nach Fig. 15 unterscheidet sich von der z. B. Fig. 7 allein dadurch, dass sie durch Weglassen einer Hohlkammer eine geringere Breite aufweist. Bei Fahrzeugen mit zwei Doppelsitzreihen nach Fig. 16 sind die Deckenverkleidungs- und Luftleitsysteme beider Übergangsbereiche vom Fahrzeugdach zu den Fahrzeugseitenwänden 8 einschließlich der Gepäckablagen 60 in der Regel identisch ausgebildet.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldungsunterlagen offenbartes Einzelmerkmal ersetzt werden kann. Insofern ist der Anspruch 1 lediglich als ein erster Formulierungsversuch für eine Erfindung zu verstehen.

## Patentansprüche

1. Deckenverkleidungs- und Luftleitsystem für Großraumfahrzeuge mit sich in Fahrzeuglängsrichtung jeweils im Übergangsbereich von der Fahrzeugdecke (7) zu den Fahrzeugseitenwänden (8) erstreckenden, am Fahrzeugaufbau befestigbaren Trägerprofilen (12, 13) und jeweils daran anordbaren Verkleidungsprofilen (9, 10), **dadurch gekennzeichnet, dass** in jedem Übergangsbereich jeweils zwei Verkleidungsprofile (9, 10) vorgesehen und derart an den Trägerprofilen (12, 13) angeordnet sind, dass sich die Längskantenbereiche der Verkleidungsprofile (9, 10) unter Bildung einer ersten Spaltöffnung (15) überlappen, wobei das in der Einbaulage obere Verkleidungsprofil (9) mit seiner oberen Randkante vom Fahrzeugdach oder einer darunter angeordneten Dachverkleidung (11) zwecks Bildung einer zweiten Spaltöffnung (16) beabstandet ist und wobei zwischen dem Fahrzeugaufbau und den Verkleidungsprofilen (9, 10) jeweils ein Luftkanal (17) ausgebildet ist.

2. Deckenverkleidungs- und Luftleitsystem nach Anspruch 1, **dadurch gekennzeichnet, dass** die Verkleidungsprofile (9, 10) an den Trägerprofilen (12, 13) jeweils über Einschub- und/oder Einrenk- und/oder Einklipsverbindungen anordbar sind.

3. Deckenverkleidungs- und Luftleitsystem nach Anspruch 1 oder 2, **dadurch gekennzeichnet, dass** das in der Einbaulage jeweils untere Verkleidungsprofil (10) einen zur benachbarten Fahrzeugseitenwand (8) hin ausgerichteten Kragen (18) mit einer darin ausgebildeten hinterschnittenen Aufnahmenut (19) zur wahlweisen Aufnahme eines Sonnenschutzrollos oder eines Teilbereichs eines Ergänzungsprofils (49) aufweist, wobei das Ergänzungsprofil (49) seinerseits zur Aufnahme eines Sonnenschutzrollos oder zur Halterung eines dritten Verkleidungsprofils (50) sowie eines Abdeckprofils (51) oder für die Abstützung einer Gepäckablage (60) vorgesehen ist.

4. Deckenverkleidungs- und Luftleitsystem nach wenigstens einem der Ansprüche 1 bis 3, **dadurch gekennzeichnet, dass** das dritte Verkleidungsprofil (50) an seiner unteren Längskante eine hinterschnittene Aufnahmenut (55) für ein Sonnenschutzrolle aufweist.

5. Deckenverkleidungs- und Luftleitsystem nach wenigstens einem der vorangegangenen Ansprüche, **dadurch gekennzeichnet, dass** dem System zumindest einer Seitenwand benachbart eine durchlaufende Gepäckablage (60) zugeordnet ist, welche im wesentlichen aus einem Hohlkammerprofil mit einer oberen, vom Fahrzeugdach beabstandeten Ablagefläche (64) besteht und von Stützen (61) getragen wird, die an den Trägerprofilen (12, 13) befestigbar sind.

6. Deckenverkleidungs- und Luftleitsystem nach Anspruch 5, **dadurch gekennzeichnet, dass** das Hohlkammerprofil der Gepäckablage (60) als Luft- bzw. Hauptluftkanal (65) zur Luftversorgung von am Hohlkammerprofil unterseitig angeordneten Luftdüsen (66) ausgeführt ist.

7. Deckenverkleidungs- und Luftleitsystem nach Anspruch 5 oder 6, **dadurch gekennzeichnet, dass** der Gepäckablage (60) ein Handlauf (71) zugeordnet ist.

8. Deckenverkleidungs- und Luftleitsystem nach Anspruch 7, **dadurch gekennzeichnet, dass** innerhalb des Handlaufs (71) eine Beleuchtungseinrichtung (74) angeordnet ist, wobei eine Spaltöffnung (72) zwischen Handlauf (71) und Hohlkammerprofil oder eine Ausbildung des Handlaufs (71) aus lichtdurchlässigem Material als Lichtaustritt vorgesehen ist.

9. Deckenverkleidungs- und Luftleitsystem nach zumindest einem der vorangegangenen Ansprüche, **dadurch gekennzeichnet, dass** die Trägerprofile (12, 13, 48) und Ergänzungsprofile (49) aus Abschnitten von Aluminiumstrangpressprofilen bestehen, während die Verkleidungsprofile (9, 10, 50) und Abdeckprofile (51) jeweils aus Kunststoff gebildet sind.

10. Deckenverkleidungs- und Luftleitsystem nach zumindest einem der vorangegangenen Ansprüche, **dadurch gekennzeichnet, dass** zwischen dem Fahrzeugdach (1) oder einer darunter angeordneten Dachverkleidung (11) und dem oberen Verkleidungsprofil (9) eine Beleuchtungseinrichtung (32) zur Versorgung des Fahrzeugs mit Raumlicht angeordnet ist.

## Claims

1. Ceiling-lining and air-ducting system for large-volume vehicles, having carrier profiles (12, 13) which can be fastened to the vehicle body and which each extend in the transition region between the vehicle ceiling (7) and the vehicle side walls (8), in the longitudinal direction of the vehicle, and having respective lining profiles (9, 10) which can be arranged on the carrier profiles, **characterized in that** two respective lining profiles (9, 10) are provided in each transition region and are arranged on the carrier profiles (12, 13) in such a way that the longitudinal edge regions of the lining profiles (9, 10) overlap one another to form a first gap opening (15), the lining profile (9), which is the upper one when in the fitted position, having its upper marginal edge spaced apart from the vehicle roof, or from a roof lining (11) arranged underneath, for the purpose of forming a second gap opening (16), and a respective air duct (17) being formed between the vehicle body and the lining profiles (9, 10).

2. Ceiling-lining and air-ducting system according to Claim 1, **characterized in that** the lining profiles (9, 10) can be arranged on the carrier profiles (12, 13) by means of respective push-in and/or bayonet-type and/or clip-in connections.

3. Ceiling-lining and air-ducting system according to Claim 1 or 2, **characterized in that** the lining profile (10), which is the respective lower one when in the fitted position, comprises a collar (18) which is oriented towards the adjacent vehicle side wall (8) and has an undercut mounting groove (19) formed therein for either mounting a sunshade roller blind or a portion of a supplementary profile (49), the supplementary profile (49) in turn being intended for the purpose of mounting a sunshade roller blind or for the purpose of holding a third lining profile (50) and also a cover profile (51) or for supporting a luggage rack (60).

4. Ceiling-lining and air-ducting system according to at least one of Claims 1 to 3, **characterized in that** the third lining profile (50) is provided at its lower longitudinal edge with an undercut mounting groove (55) for a sunshade roller.

5. Ceiling-lining and air-ducting system according to at least one of the preceding claims, **characterized in that** a continuous luggage rack (60) is assigned to the system, adjacent to at least one side wall, this luggage rack essentially comprising a hollow chamber profile with an upper stowing surface (64) spaced apart from the vehicle roof and being borne by supports (61) which can be fastened to the carrier profiles (12, 13).

6. Ceiling-lining and air-ducting system according to Claim 5, **characterized in that** the hollow chamber profile of the luggage rack (60) is designed as an air duct or main air duct (65) for supplying air from air nozzles (66) arranged on the underside of the hollow chamber profile.

7. Ceiling-lining and air-ducting system according to Claim 5 or 6, **characterized in that** the luggage rack (60) is assigned a handrail (71).

8. Ceiling-lining and air-ducting system according to Claim 7, **characterized in that** a lighting device (74) is arranged inside the handrail (71), the light-emergence means provided comprising a gap opening (72) between the handrail (71) and the hollow chamber profile or comprising the handrail (71) being formed from light-transmitting material.

9. Ceiling-lining and air-ducting system according to at least one of the preceding claims, **characterized in that** the carrier profiles (12, 13, 48) and supplementary profiles (49) consist of sections of extruded aluminium profiles, while the lining profiles (9, 10, 50) and cover profiles (51) are each formed from plastic.

10. Ceiling-lining and air-ducting system according to at least one of the preceding claims, **characterized in that** a lighting device (32) for supplying the vehicle with interior light is arranged between the vehicle roof (1), or a roof lining (11) arranged underneath, and the upper lining profile (9).

## Revendications

1. Système de revêtement de toit et de conduit d'air pour des véhicules de grande capacité avec des profilés de support (12, 13) fixables à la superstructure du véhicule et s'étendant dans la direction longitudinale du véhicule chaque fois dans la région de transition entre le toit (7) du véhicule et les parois latérales (8) du véhicule et avec des profilés de revêtement (9, 10) à disposer respectivement sur ceux-ci, **caractérisé en ce que** deux profilés de revêtement (9, 10) sont chaque fois prévus dans chaque région de transition et sont disposés sur les profilés de support (12, 13) de telle façon que les régions des côtés longitudinaux des profilés de revêtement (9, 10) se recouvrent en formant une première fente ouverte (15), dans lequel le profilé de revêtement (9) supérieur en position montée a son bord supérieur espacé du toit du véhicule ou d'un revêtement de toit (11) disposé sous celui-ci afin de former une deuxième fente ouverte (16) et dans lequel un canal d'air (17) est chaque fois formé entre la superstructure du véhicule et les profilés de revêtement (9, 10).

2. Système de revêtement de toit et de conduit d'air selon la revendication 1, **caractérisé en ce que** les profilés de revêtement (9, 10) peuvent être disposés sur les profilés de support (12, 13) chaque fois par des assemblages par insertion et/ou à baionnette et/ou par clippage.

3. Système de revêtement de toit et de conduit d'air selon la revendication 1 ou 2, **caractérisé en ce que** le profilé de revêtement (10) chaque fois inférieur en position montée présente un rebord (18) orienté vers la paroi latérale voisine (8) du véhicule avec une gorge de réception rétrogradante (19) formée dans celui-ci pour y loger au choix un écran pare-soleil enroulé ou une partie d'un profilé de finition (49), le profilé de finition (49) étant pour sa part prévu pour recevoir un écran pare-soleil enroulé ou pour soutenir un troisième profilé de revêtement (50) ainsi qu'un profilé de masquage (51) ou pour supporter un porte-bagages (60).

4. Système de revêtement de toit et de conduit d'air selon au moins une des revendications 1 à 3, **caractérisé en ce que** le troisième profilé de revêtement (50) présente sur son côté longitudinal inférieur une gorge de réception rétrogradante (55) pour un écran pare-soleil enroulé.

5. Système de revêtement de toit et de conduit d'air selon au moins une des revendications précédentes, **caractérisé en ce qu'**un porte-bagages continu (60) est associé au système à proximité d'au moins une paroi latérale, lequel se compose essentiellement d'un profilé à chambres creuses avec une face de dépôt supérieure (64) espacée du toit du véhicule et est porté par des supports (61), qui peuvent être fixés aux profilés de support (12, 13).

6. Système de revêtement de toit et de conduit d'air selon la revendication 5, **caractérisé en ce que** le profilé à chambres creuses du porte-bagages (60) est configuré en un canal d'air ou canal d'air principal (65) pour l'alimentation en air de buses à air (66) disposées dans la face inférieure du profilé à chambres creuses.

7. Système de revêtement de toit et de conduit d'air selon la revendication 5 ou 6, **caractérisé en ce qu'**une main courante (71) est associée au porte-bagages (60).

8. Système de revêtement de toit et de conduit d'air selon la revendication 7, **caractérisé en ce qu'**un dispositif d'éclairage (74) est disposé à l'intérieur de la main courante (71), dans lequel il est prévu une fente ouverte (72) entre la main courante (71) et le profilé à chambres creuses ou une configuration de la main courante (71) en une matière translucide pour la sortie de la lumière.

9. Système de revêtement de toit et de conduit d'air selon au moins une des revendications précédentes, **caractérisé en ce que** les profilés de support (12, 13, 48) et les profilés de finition (49) se composent de parties de profilés extrudés en aluminium, tandis que les profilés de revêtement (9, 10, 50) et les profilés de masquage (51) sont chaque fois formés de matière plastique.

10. Système de revêtement de toit et de conduit d'air selon au moins une des revendications précédentes, **caractérisé en ce qu'**un dispositif d'éclairage (32) pour l'alimentation du véhicule en lumière ambiante est disposé entre le toit (1) du véhicule ou un revêtement de toit (11) disposé sous celui-ci et le profilé de revêtement supérieur (9).
